# EUROPEAN PATENT SPECIFICATION

(11) **EP 2 605 558 B1**
(45) Date of publication and mention of the grant of the patent: **27.09.2017**
(21) Application number: 12007943.9
(22) Date of filing: 26.11.2012
(51) Int. Cl.: H04W 76/04, H04W 8/18, H04W 88/06

(54) **Controlling radio access technology switch in a user equipement supporting multiple radio access technology**
Steuerung der Funkzugangstechnology in einem Benutzergerät, das mehrfache Funkzugangstechnologien unterstützt
Contrôle de la commutation de la technologie d'accès radio dans un équipement utilisateur supportant de multiples technologies d'accès radio

(30) Priority: 12.12.2011 US 201161569621 P; 17.01.2012 US 201261587521 P; 06.02.2012 US 201261595546 P; 22.05.2012 US 201213477691
(43) Date of publication of application: 19.06.2013
(73) Proprietor: Avago Technologies General IP (Singapore) Pte. Ltd., Singapore 768923 (SG)
(72) Inventor: Pattaswamy, Giridhar, Bracknell, RG12 7RN (GB); Abhishek, Pandit, Wokingham, RG41 3HE (GB); Yongqian, Wang, East Brunswick, NJ 08816 (US); Yuan, Liu, Holmdel, NJ 07733 (US); Navin, Karra, Bracknell, RG42 2FQ (GB); Stephen, Richards, Maidenhead, SL6 6HF (GB); Xiaoxin, Qiu, Basking Ridge, NJ 07920 (US); Zhijun, Gong, Holmdel, NJ 07733 (US); Yaxin, Cao, Laurance Harbor, NJ 08879 (US)
(74) Representative: Jehle, Volker Armin

(56) References cited:
- EP-A1- 2 352 353
- WO-A2-2007/108811
- US-A1- 2009 131 054
- US-A1- 2009 180 451
- US-A1- 2010 304 782
- US-A1- 2011 235 587

## Description

### Technical Field

This disclosure relates to communication devices with multiple Subscriber Identity Modules (SIMs). The disclosure also relates to controlling radio access technologies (RATs) for improving operating conditions of user equipment in an idle mode or connected mode, for example.

### 3. Background

Rapid advances in electronics and communication technologies, driven by immense customer demand, have resulted in the widespread adoption of mobile communication devices. The extent of the proliferation of such devices is readily apparent in view of some estimates that put the number of wireless subscriber connections in use around the world at nearly 80% of the world's population. Furthermore, other estimates indicate that (as just three examples) the United States, Italy, and the UK have more mobile phones in use in each country than there are people living in those countries.

Relatively recently, cellular phone manufactures have introduced phone designs that include multiple SIM cards. Each SIM card facilitates a separate connection to the same network or different networks. As a result, the SIMs provide the owner of the phone with, for example, two different phone numbers handled by the same phone hardware. Accordingly, the multiple SIM approach alleviates to some degree the need to carry different physical phones, and improvements in multiple SIM communication devices will continue to make such devices attractive options for the consumer. US2009/0131054 discloses a wireless communication terminal with two SIM cards corresponding to two different RATs, W-CDMA and GSM. The device can work in either single mode or in dual standby mode and can always switch between the two RATs.

### BRIEF SUMMARY OF THE INVENTION

According to the invention a method is is provided according to independent claim 1. According to the invention a system according to the attached independent system claim 8 is provided.

### BRIEF DESCRIPTION OF THE DRAWINGS

The innovation may be better understood with reference to the following drawings and description. In the figures, like reference numerals designate corresponding parts throughout the different views.
Figure 1 shows an example of user equipment with multiple SIMs.
Figure 2 shows an example of user equipment with a single SIM.
Figure 3 shows an example of a network controller.
Figure 4 illustrates a sequence diagram that shows RAT scheduling in example multi-SIM use cases.
Figures 5-11 show examples of logic that user equipment may implement to use different RATs.

### DETAILED DESCRIPTION

The discussion below refers to user equipment. User equipment may take many different forms and have many different functions. As one example, user equipment may be a cellular phone capable of making and receiving wireless phone calls. The user equipment may also be a smartphone that, in addition to making and receiving phone calls, runs general purpose applications. User equipment may be virtually any device that wirelessly connects to a network, including as additional examples a driver assistance module in a vehicle, an emergency transponder, a pager, a satellite television receiver, a networked stereo receiver, a computer system, music player, or virtually any other device. The discussion below addresses how to control radio access technologies (RATs) in user equipment that includes one or more Subscriber Identity Modules (SIMs). RATs may include technologies that arise from UMTS, 3GPP, GSM (R) Association, Long Term Evolution (TM) efforts.

User equipment that can communicate via multiple RATs provides challenges for a single or multiple SIM standby mode (also referred to as idle mode or camped mode). The user equipment described below includes techniques that may improve operation by controlling access to particular RAT(s) for the user equipment while it is operating in certain modes, such as idle mode. Once the user equipment is in a connected mode, regardless of how much uplink or downlink activity is occurring, inter-RAT techniques in the user equipment can provide the benefits of access to multiple RATs. The techniques are useful in many different environments, such as an environment that is predominantly 2G or 3G but that also has 4G hot spot coverage. The techniques may also be useful for providing enhanced operations in 2G/3G capable dual SIM user equipment running in a camped mode or other modes. The techniques are not limited to 2G/3G/4G or any other particular standards, but may apply to any standards in a sequence of evolving or incrementally improving standards.

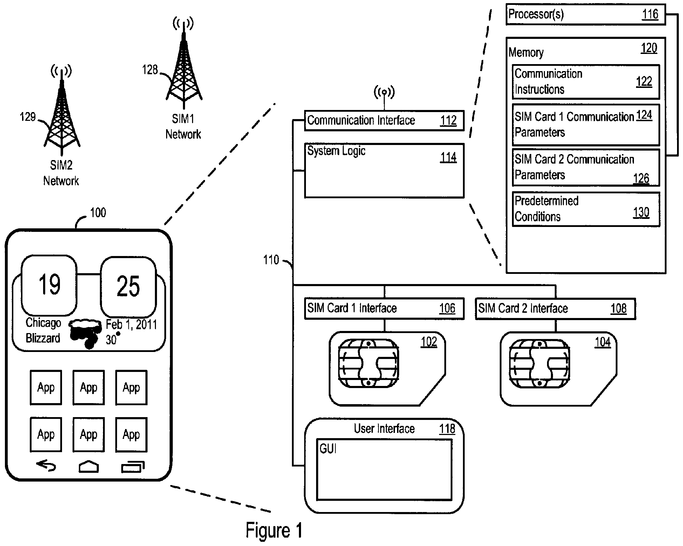

Figure 1 shows an example of user equipment 100 with multiple SIMs, in this example the SIM1 102 and the SIM2 104. An electrical and physical interface 106 connects SIM1 102 to the rest of the user equipment hardware, for example, to the system bus 110. Similarly, an electrical and physical interface 108 connects the SIM2 to the system bus 110.

The user equipment 100 includes a communication interface 112, system logic 114, and a user interface 118. The system logic 114 may include any combination of hardware, software, firmware, or other logic. The system logic 114 may be implemented, for example, in a system on a chip (SoC), application specific integrated circuit (ASIC), or other circuitry. The system logic 114 is part of the implementation of any desired functionality in the user equipment 100. In that regard, the system logic 114 may include logic that facilitates, as examples, running applications, accepting user inputs, saving and retrieving application data, establishing, maintaining, and terminating cellular phone calls, wireless network connections, Bluetooth connections, or other connections, and displaying relevant information on the user interface 118. The user interface 118 may include a graphical user interface, touch sensitive display, voice or facial recognition inputs, buttons, switches, and other user interface elements.

The communication interface 112 may include one or more transceivers. The transceivers may be wireless transceivers that include modulation circuitry,/demodulation circuitry, power amplifiers, low noise amplifiers, coders/decoders, waveform shaping circuitry, phase locked loops (PLLs), clock generators, analog to digital and digital to analog converters and/or other logic for transmitting and receiving through one or more antennas, or through a physical (e.g., wireline) medium. As one implementation example, the communication interface 112 and system logic 114 may include a BCM2091 EDGE/HSPA Multi-Mode, Multi-Band Cellular Transceiver and a BCM59056 advanced power management unit (PMU), controlled by a BCM28150 HSPA+ system-on-a-chip (SoC) baseband smartphone processer. These integrated circuits, as well as other hardware and software implementation options for the user equipment 100, are available from Broadcom Corporation of Irvine California. The transmitted and received signals may adhere to any of a diverse array of formats, protocols, modulations, frequency channels, bit rates, and encodings. As one specific example, the communication interface 112 may support transmission and reception under the Universal Mobile Telecommunications System (UMTS). The techniques described below, however, are applicable to other communications technologies regardless of whether they arise from the 3rd Generation Partnership Project (3GPP), GSM (R) Association, Long Term Evolution (LTE) (TM) efforts, or other partnerships or other standards bodies.

Existing communication standards include the Transport Control Protocol (TCP)/Internet Protocol (IP) standard. The user equipment 100 may implement any such standard as part of the logic that handles data connections, and more specifically to handle data packet communications between the user equipment 100 and the networks. Some goals of TCP include providing reliability and systematic communication of packets from one user equipment to another. Because of these benefits, TCP is the protocol that the majority of Internet applications use, including World Wide Web browsers, email clients, remote administration and file transfer applications, and many others. Other applications, which require less reliable data or systematic communication, may use the User Datagram Protocol (UDP), which provides a datagram service that trades reduced latency for reliability.

In one implementation, the system logic 114 includes one or more processors 116 and a memory 120. The memory 120 stores, for example, communication instructions 122 that the processor 116 executes. SIM1 102 and SIM2 104 may be on the same or different networks, and may be served by the same or different cells. For example, the Node B 128 may manage a particular cell to which SIM1 102 is connected, while the Node B 129 may manage a different cell to which SIM2 104 is connected. Accordingly, a circuit switched (CS) or a packet switched (PS) communication may be established for each of SIM1 and SIM2 independently. The user equipment 100 may store communication parameters, including parameters for each of the SIMs and for each type of communication. The parameters may be stored in the memory 120 as the SIM1 communication parameters 124 and the SIM2 communication parameters 126. The memory 120 may also include other parameters and instructions such as predetermined conditions 130 and multi-RAT switch logic 1100 (both described below). The Node Bs 128 and 129 (e.g., UMTS network base stations) can signal some or all of the communication parameters (e.g., paging indicator timing parameters) to the user equipment 100 through information elements in a control channel, for example.

As mentioned above, the Node B 128 may be part of a network that supports SIM1 102, while the Node B 129 may be part of the same or different network that supports SIM2 104. As will be described in more detail below, the system logic 114 may enhance communications in a dual SIM environment by controlling which RAT(s) to employ. For example, the system logic 114 may assist in reducing power consumption by choosing to employ a first RAT that provides less bandwidth but uses less power to operate than a performance-centered second RAT. This would be advantageous in a scenario where power consumption takes priority over allotted bandwidth.

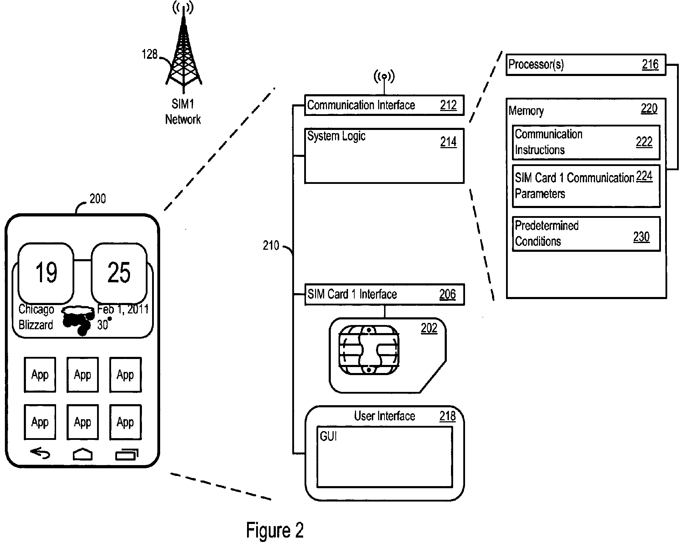

Figure 2 shows an example of user equipment 200 similar to the user equipment 100, but instead includes a single SIM, in this example the SIM1 202. Similarly, an electrical and physical interface 206 connects SIM1 202 to the rest of the user equipment hardware, for example, to the system bus 210. The user equipment 200 includes a communication interface 212, system logic 214, and a user interface 218, which may include similar aspects to the communication interface 212, the system logic 214, and the user interface 218. For example, the system logic 114 may include one or more processors 216 and a memory 220. The memory 220 may store, for example, communication instructions 222 that the processor 216 executes.

Also, the Node B 128 may manage a particular cell to which SIM1 202 is connected. Accordingly, a CS or a PS communication may be established for the SIM1. Further, the user equipment 100 may store communication parameters, including parameters for the SIM1 202 and for each type of communication. The communication parameters may be stored in the memory 220 as the SIM1 communication parameters 124. The memory 220 may also include other parameters and instructions such as predetermined conditions 230 and multi-RAT switch logic 1100 (both described below). The Node B 128 can signal the communication parameters to the user equipment 200 through information elements in a control channel, for example.

As will be described in more detail below, the system logic 214, analogous to the system logic 114, may increase efficiency of communications in a single SIM environment also. As will also be suggested in more detail below, the system logic 214 may increase efficiency of communications in a single SIM environment by controlling which RAT(s) to employ. For example, the system logic 214 may assist in reducing power consumption by choosing to employ a first RAT that provides less bandwidth but uses less power to operate than a performance-centered second RAT.

Although the techniques described in this document pertain to a dual SIM environment, such methods may also be analogously applied to a single SIM environment or user equipment having more than two SIMs.

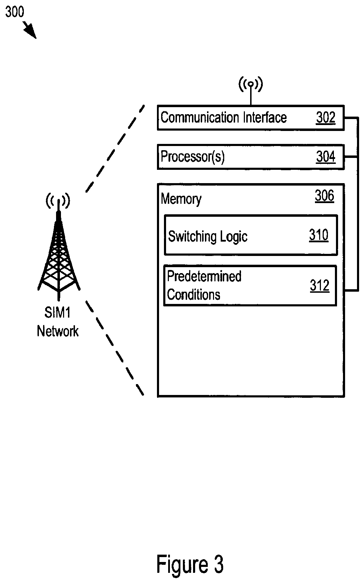

Figure 3 shows an example of a network controller 300 (e.g., the Node B 128 or 228) that in conjunction with one of the user equipment 100 or 200 facilitates communication over a network. The network controller 300 includes a communication interface 302, processors 304, and a memory 306. The hardware and software in the network controller 300 may be implemented as a UMTS Node B, GSM base station, or other type of network controller. The network controller 300 includes logic for handing communication with user equipment. For example, the network controller 300 may include switching logic 310 for transitioning user equipment between communication technologies. The switching logic 310 may transition the user equipment 100 between RATs after receiving notifications from the user equipment 100 or 200 concerning cell availability and RAT processing capabilities. In addition, the switching logic 310 may communicate messages to the user equipment 100 to facilitate transitions, such as an inter-RAT handover message that commands the user equipment 100 to switch from 3G to 4G. The switching logic 310 may make transition decisions based in whole or in part on a particular set of predetermined conditions 312. Such predetermined conditions 312 may include, as examples, whether the user equipment 100 is in a cell of a particular type (e.g., a 2G or 4G cell), whether the user equipment 100 is able to handle particular communication standards (e.g., 4G), or other conditions.

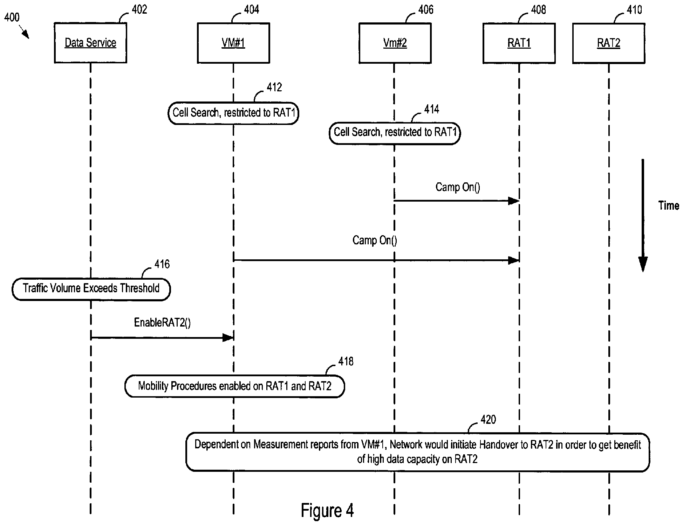

Figure 4 illustrates an example sequence diagram 400 that shows how the user equipment 100 may switch between RATs.

Wireless communications may include CS and PS communications. While CS communications are commonly used for connecting voice circuits, dedicated circuits persisting between two communicating parties or nodes can be extended to signal content other than voice. A difference between CS and PS communications is that CS communications may provide for continuous transfer without overhead associated with PS communications. PS communications may include overhead for meeting quality of service guarantees afforded by reserving bandwidth and keeping PS communications protected from competing uses. Because of this overhead PS communications typically may benefit largely from RATs that provide greater performance characteristics, such as greater bandwidth or higher data transfer rates.

Also, the following description of Figure 4 and other parts of this application refer to a virtual modem (VM). A VM may refer to a software implementation of physical resources of the user equipment 100 or 200, for example through hardware virtualization. As described above with respect to the communication interface 112 or 212, the user equipment 100 or 200 may include one or more sets of physical baseband or RF resources, such as coders/decoders, modulators, amplifiers, and antennas. A VM may represent a software virtualization of any of the resources in the RF path in the communication interface 112 or 212. Accordingly, each SIM of the user equipment 100 or 200 may be assigned a VM, and thus recognize and use the virtualized communication resources of the VM to communicate across a network, without the need to understand or deal with the complexities that may arise from sharing RF path hardware between multiple SIMs. A separate VM may be instantiated and assigned to each SIM to communicate across a network associated with a respective SIM. Said another way, multiple VMs may share a common set of physical communication resources of the user equipment 100 or 200, with the VMs managed and controlled by VM logic, such as a virtual machine controller, which may be implemented in hardware, software, or both. The VM logic, as one example, may schedule or otherwise manage access to the RF path hardware for each SIM, as well as respond to requests made by the VMs for access to the RF path resources for their particular SIM.

Referring back to Figure 4, depicted is data service 402, a first VM 404 corresponding to a first SIM, a second VM 406 corresponding to second SIM, each hosted by user equipment (e.g., the user equipment 100 or the user equipment 200), and a first RAT (RAT) 408 and a second RAT 410. The first RAT 408 may support a 2G or 3G cell, for example, and the second RAT 410 may support a 4G cell, for example. The data service 402 may include any system that provides the transfer of data across one or more networks to or from user equipment and network controllers, such as the user equipment 100 and 200 and the network controller 300.

The sequence diagram 400 illustrates that the first VM 404 performing a cell search specifically for the first RAT 408 (412). Also, the second VM 406 may perform a cell search specifically for the first RAT 408 as well (414). Once the first RAT 408 is discovered by the first VM 404, for example, the first VM 404 may operate in an idle mode, camping on the discovered cell. Similarly, when the second VM 406 discovers the cell supported by the first RAT 408, the second VM 406 may camp on the discovered cell. In other words, the user equipment 100 may in certain modes constrain its connections to the network to any subset of available RATs (e.g., to 2G/3G out of the set of 2G/3G/4G).

Each VM may transition from idle or camped mode to an active mode during which the VM has been assigned dedicated RF resources to send or receive any desired PS or CS data. The transition happens when, for example, a VM establishes a CS or PS session with its network controller. The VM may establish a CS or PS session on its own accord (e.g., because the user placed a phone call or started a data download), or may establish a CS or PS session in response to paging or other notification from the network controller (e.g., because a third party is calling the user).

Also, a predetermined transition condition may occur (416). One example of the transition condition is that communication traffic from the data service 402 to the user equipment 100, from the user equipment 100 to the data service 402, or both exceeds a communication traffic threshold. More specifically, the transition condition may be that a target transmit or receive data rate for the connection exceeds what the RAT that is currently supporting the connection can provide. As another example, the transition condition may be an operator preference input on the user interface or saved in the memory 120. The operator input may specify, for example, that the user equipment 100 switch from 3G to 4G whenever 4G is available (e.g., regardless of bandwidth need or availability). Other predetermined transition conditions may include a specific requested or desired amount of bandwidth, or range of bandwidth, a specified desired level of power consumption (e.g., the user equipment 100 may consume less power in 3G mode than 4G mode, and the transition condition may specify that the user equipment use the lowest power consuming RAT). The transition conditions may be based on an evaluation of prior transition conditions, such as an evaluation of transition conditions over a period of time (e.g., evaluating averages or hysteresis of the transition conditions).

Upon meeting the predetermined transition condition, such as exceeding the target data rate, the first VM will enable the second RAT 410. The second RAT 410 may be one that can address the issue raised by the transition condition, such as the desire for a higher data rate. Therefore, the VM is permitted to communicate via the first RAT 408 or the second RAT 410 (418). Prior to that point, either VM may suppress a transition to the second RAT 410 in ways that are described below. Dependent on operating conditions reported to the first VM 404 either from the user equipment or over the network, a network controller (e.g., the network controller 300) may initiate RAT handover from the first RAT 408 to the second RAT 410 in order to accommodate a new operation condition, such as increased communication traffic (420). The initiation of RAT handover in the user equipment 100 may be controlled by the switching logic 310, such as by the switching logic 310 sending a VM an inter-RAT handover message. However, the initiation of the RAT handover may happen in response to a trigger from the user equipment 100 signaling a desire or ability to communicate via the second RAT 410. The VM may effectively suppress the transition to the second RAT 410 by taking certain actions or forgoing certain actions, as examples: not signaling to the network controller the ability to handle the second RAT 410; signaling to the network controller that the user equipment cannot handle the second RAT 410; not signaling that cell coverage is found for the second RAT 410; and signaling a loss of (or the absence of) cell signal for the second RAT 410. The VM may suppress the transition regardless of whether the above actions or inactions are true or reflect the real situation at the user equipment 100. The transition is suppressed because the network controller will not instruct the user equipment 100 to transition to a RAT that the user equipment 100 cannot support or for which the user equipment 100 has no signal coverage.

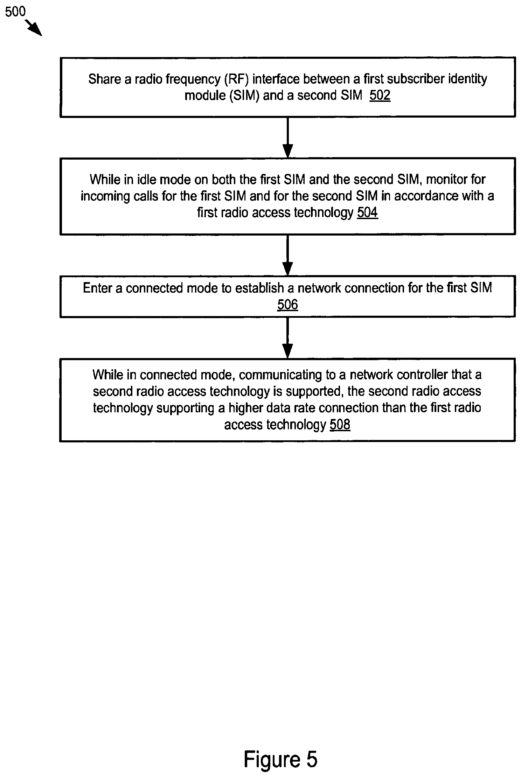

Figure 5 shows example logic 500 that the system logic 114 may implement, for example with the processor 116, the communication instructions 122, and the parameters 124 and 126. The logic 500 may share a radio frequency (RF) interface between the SIM1 102 and the SIM2 104 (502), for example by scheduling time division access to the RF interface. While in an idle mode, on both the SIM1 102 and the SIM2 104, the logic 500 may instruct the system logic 114 to monitor for incoming calls for the two SIMs in accordance with a first RAT (504). The first RAT may be a 2G and/or 3G technology, for example. Either SIM may enter connected mode that establishes a network connection for a PS or CS session, as examples (506). While in connected mode, the logic 500 may instruct the user equipment 100 to communicate via the wireless radio interface to a network controller (e.g., the network controller 300) that a second RAT is supported (508). The second RAT, such as a 4G RAT may support a higher data rate connection than the first RAT, or have another characteristic that makes it preferable to use in certain circumstances (e.g., better reliability, or lower power cost to transmit or receive). The logic 500 may be implemented in user equipment having any number of SIMs. For example, the logic 500 may camp the single SIM on a cell of a certain technology (e.g., 2G), enter connected mode, and then communicate support for a different technology (e.g., 3G, or 4G) to the network controller when a transition to the different technology meets a transition condition.

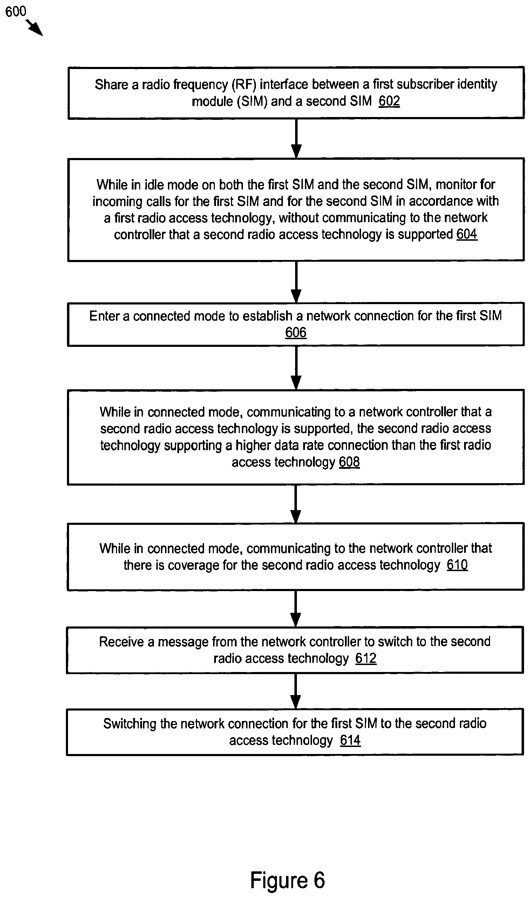

Figure 6 shows other example logic 600 that the system logic 114 may implement in a single or multiple SIM environment, for example with the processor 116, the communication instructions 122, and the parameters 124 and 126. The logic 600 may share a RF interface between the SIM1 102 and the SIM2 104 (602). While the user equipment is in idle mode on both the first SIM and the second SIM, the logic 600 may monitor for incoming calls for either SIM in accordance with a first RAT (604). This monitoring can occur without communicating to a network controller (e.g., the network controller 300) that a second RAT is supported. The logic 600 may also instruct the user equipment 100 to enter a connected mode to establish a network connection for SIM 1 102 (606). Then, while in connected mode, the logic 600 may instruct the communication interface 112 to communicate to a network controller that a second RAT is supported (608). This may happen when a transition condition is met, such as when the second RAT supports a higher data rate connection than the first RAT and the higher data rate can facilitate meeting a target data rate. Also, while in connected mode, the logic 600 may instruct the communication interface 112 to communicate to the network controller that there is coverage for the second RAT (610). In other words, the user equipment may inform the network that the user equipment 100 can both handle a particular RAT, and also has cell or signal coverage for that particular RAT. In response, the logic 600 may receive a message from the network controller to switch to the second RAT (612). The logic 600 may also switch the network connection configuration for the SIM 1 102 to transition to the second RAT (614). If the SIM 2 104 makes a connection to the network, then the logic 600 may also suspend or terminate the SIM 1 102 connection, regardless of which RAT supports the connection, and allow SIM 2 104 access to the RF interface.

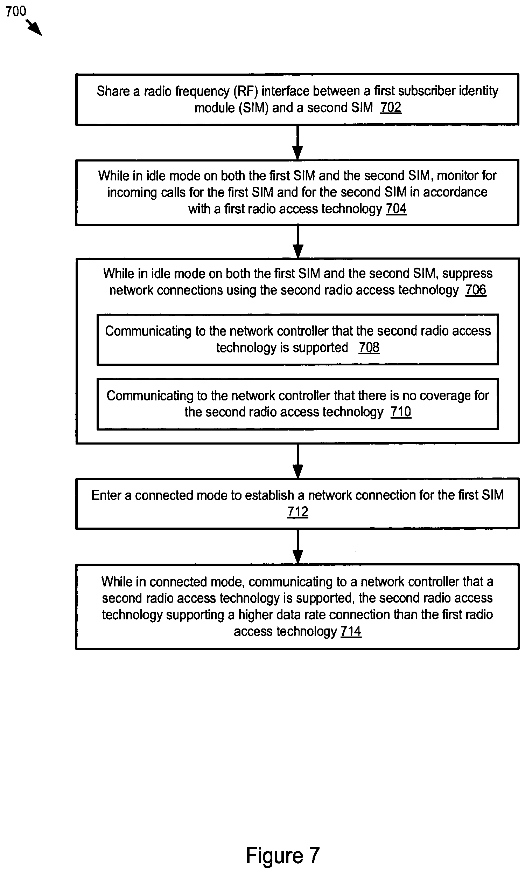

Figure 7 shows example logic 700 that is analogous, respectively, at 702, 704, 712, and 714 to the logic 500 at 502, 504, 506, and 508. However, as noted in the logic 700, while the user equipment 100 is in an idle mode on both SIMs, the logic 700 may suppress network connection transitions to different RATs (e.g., the second RAT 410). This suppression may include communicating to a network controller that the second RAT is supported (708), and also communicating to the network controller that there is no coverage for the second RAT (at 710) (even if there is coverage).

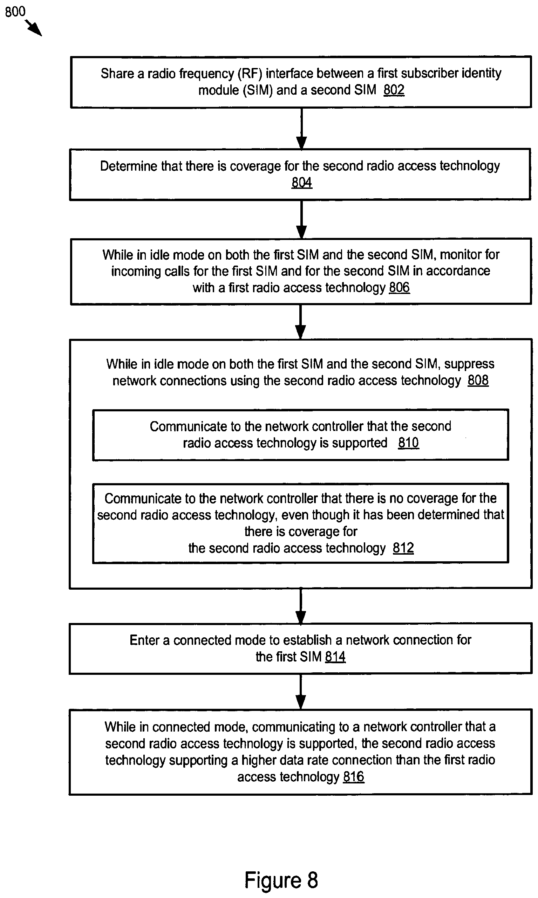

Figure 8 shows example logic 800 that is analogous, respectively, at 802, 806, 808, 814, and 816 to the logic 700 at 702, 704, 706, 712, and 714. The logic 800 may also suppress transition to a different RAT that currently supports an active connection. In the example shown in Figure 8, the logic 800 may suppress the transition by communicating to the network controller that the second RAT is supported (810), but that there is no coverage for the second RAT (812). This may be communicated to the network controller even though the user equipment has in fact discovered a cell or signal that provides coverage for the second RAT.

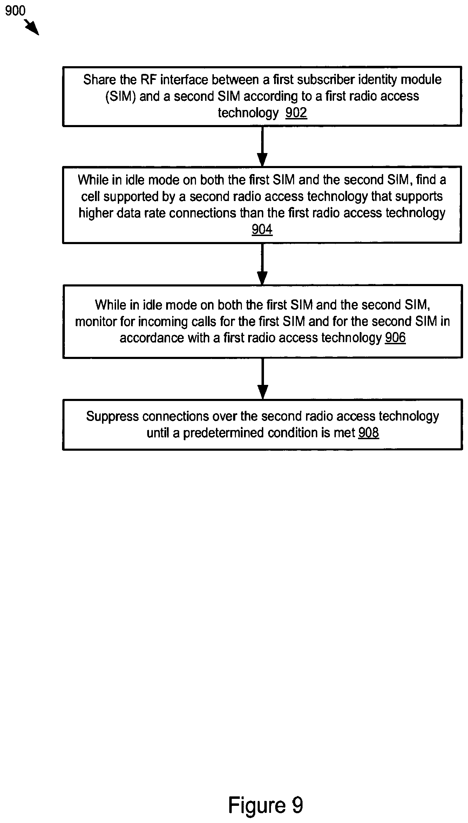

Figure 9 also shows example logic 900 that the system logic 114 may implement, for example with the processor 116, the communication instructions 122, and the parameters 124 and 126. The logic 900 may share an RF interface between a first SIM and a second SIM according to a first RAT (e.g., 2G or 3G) (902). While in idle mode on both the first SIM and the second SIM, the logic 900 may instruct the processor 116, interacting with the communication interface 112, for example, to search for and discover a cell supported by a second RAT that has a criteria different than the first RAT, such as supporting a higher data rate connection than the first RAT, or requiring lower power consumption than the first RAT (904). Also, while in idle mode on both the first SIM 102 and the second SIM 104, the logic 900 may instruct the system logic 114, interacting with the communication interface 112, to monitor for incoming connections (e.g., voice calls or data sessions) for the first SIM 102 and for the second SIM 104 in accordance with a first RAT (906). Further, the logic 900 may facilitate suppressing connections over the second RAT until a predetermined condition of the predetermined conditions 130 is met (908).

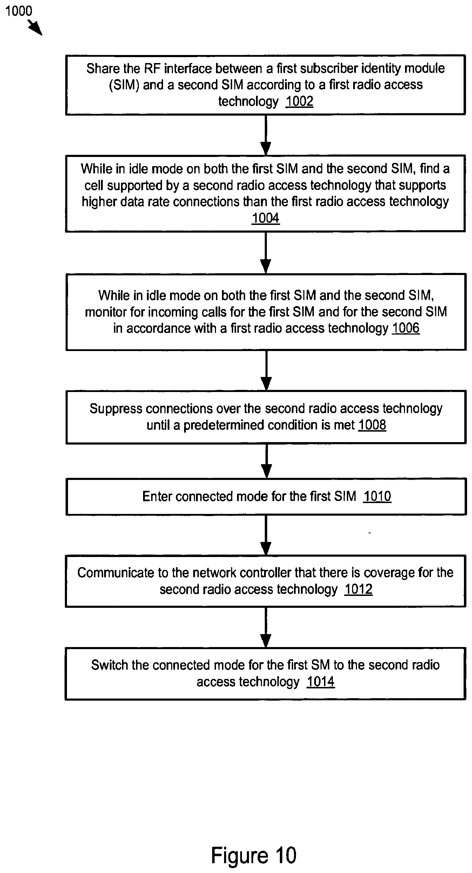

Figure 10 also shows example logic 1000 that the system logic 114 may implement, for example with the processor 116, the communication instructions 122, and the parameters 124 and 126. The logic 1000 may share an RF interface between a first SIM and a second SIM according to a first RAT (1002). Then, while in idle mode on both the first SIM and the second SIM, the logic 1000 may instruct the system logic 114, interacting with the communication interface 112, to search for and discover a cell supported by a second RAT that supports higher data rate connections than a first RAT, for example (1004). Also in the idle mode, the system logic 114 may be configured to monitor for incoming calls for the first SIM and for the second SIM in accordance with a first RAT (1006). In the idle mode or the connected mode, the logic 1000 may suppress connections over the second RAT until a predetermined transition condition is met (1008). The logic 1000 may also instruct the user equipment to enter connected mode for the first SIM (1010). In connected mode (or even in idle mode in some embodiments), the logic 1000 may communicate via the communication interface 112 to the network controller (e.g., network controller 300) that there is coverage for the second RAT (1012). Further, the logic 1000 may switch the connected mode for the first SIM to the second RAT (1014). This last instruction may be due to a command, such as an inter-RAT handover message, from the network controller.

In some implementations, once the user equipment 100 switches to the second RAT (e.g., from 2G to 3G), the system logic 114 may pass on receiving incoming calls. As examples, the user equipment 100 may forgo monitoring for incoming calls, or may reject incoming calls if they are detected. More particularly, the user equipment 100 may disallow the idle mode SIM to interrupt the active mode SIM to check for paging indicators or other incoming call indicia, while the active mode SIM is active on the second RAT (e.g., while the active mode SIM is receiving or sending data at the higher data rate). However, if the second SIM will make an outgoing connection, the system logic 114 may permit interruption or termination of the active mode SIM connection to give SIM 2 access to the RF interface to make its PS or CS connection.

In some implementations, the system logic 114 may specifically monitor for available RATs. For example, while the SIMs are camped on 2G or 3G cells, the system logic 114 may search for and discover signal coverage for 4G cells to make informed future decisions about how to connect to the network.

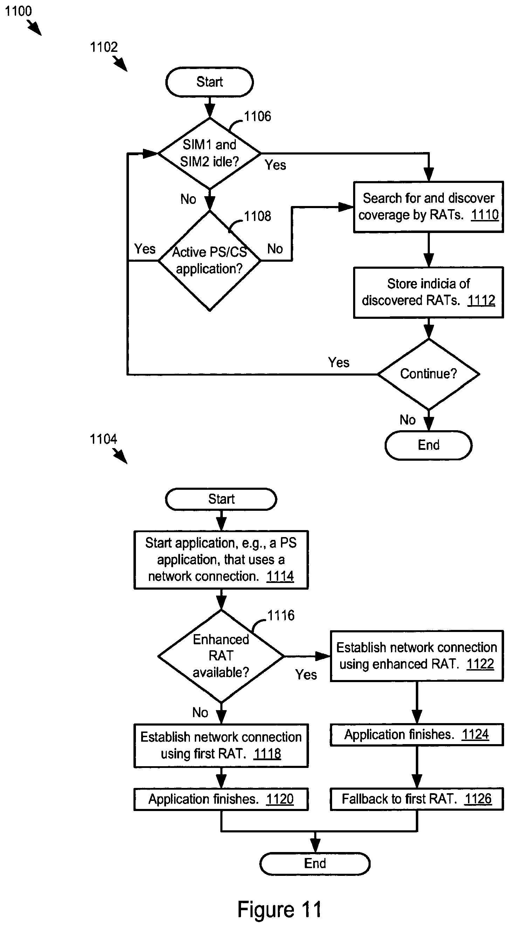

Figure 11 shows example logic 1100 that may be implemented in the system logic 114 (e.g., using the communication instructions 122) to perform monitoring for calls, such as CS or PS calls. For the purposes of discussion, the logic 1100 is segmented into two logic sections 1102 and 1104. The logic 1102 determines whether SIM1 102 and SIM2 104 are in idle mode (1106) or whether there is no active PS or CS application (e.g., there is no PS application active on the RF) (1108). If both SIMs are idle, or there is no active application, then the logic 1102 may search for and discover RATs (1110). The logic 1102 may search for and discover RATs by giving either SIM 1 102 or SIM 2 104 access to the RF and receiving signals at the communication interface 112. The system logic 114 processes the signals to find indicia of RAT coverage by one or more RATs. Such indicia include 2G, 3G, or 4G system control channels, beacons, or other signal characteristics generated by network controllers that allow user equipment 100 to discover signal coverage.

When the logic 1102 proceeds as described above, the search and discovery process has characteristics of a background search. One reason is that the search and discovery occurs while the SIMs are idle, or there is no active application currently on the RF interface. The logic 1102 may store in memory any indicia of the RATs discovered (1112), such as RAT type (2G/3G/4G, signal strength, cell identifiers, or other indicia).

The logic 1104 starts an application (1114). The application may be an application that establishes a PS session over a network connection to handle a data connection (e.g., a web browser). However, in other implementations, the application may be a voice application that establishes a CS session over a network connection to handle a voice call. A first RAT may support the network connection. For example, the first network connection might ordinarily be made as a 2G or 3G network connection. The logic 1104 may also determine whether an enhanced RAT is available (1116), for example by checking the memory for the indicia of the discovered RATs (saved at 1112). For example, the logic 1104 may determine whether a RAT that supports a higher data rate, has more reliable communication, or uses less power is available. If not, the logic 1104 may establish the network connection for the application using the first RAT (1118) which may persist until the application finishes (1120). Otherwise, if the enhanced RAT is available, then the logic 1104 may establish the network connection using the enhanced RAT (1122). As one example, the logic 1104 may establish the enhanced network connection by informing the network controller that the user equipment 100 is capable of using the enhanced RAT, and that signal coverage for the enhanced RAT exists, and then initially establishing the network connection using the enhanced RAT, e.g., when instructed or permitted by the network controller. Alternatively, the logic 1104 may initially establish the network connection using the first RAT, and then transition the application to the enhanced RAT, e.g., when instructed or permitted by the network controller. When the application finishes (1124), the logic 1104 may fallback to using the first RAT (1126) to perform activities such as background page monitoring for incoming calls on a 2G or 3G RAT.

The techniques described in this detailed description are not limited to any particular communication standard, communication standard parameters, or control or communication channels. Instead, the techniques described above are applicable to any communication aspects to achieve any desired efficiency goal in a communication system. Furthermore, techniques described in this detailed description are not limited to any particular ordering. Although the several of the figures depict a particular ordering of sub-processes, such ordering is merely meant to be illustrative.

The methods, devices, techniques, and logic described in this detailed description may be implemented in many different ways in many different combinations of hardware, software or firmware or both hardware and software. For example, all or parts of the system may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. All or part of the logic described above may be implemented as instructions for execution by a processor, controller, or other processing device and may be stored in a tangible or non-transitory machine-readable or computer-readable medium such as flash memory, random access memory (RAM) or read only memory (ROM), erasable programmable read only memory (EPROM) or other machine-readable medium such as a compact disc read only memory (CDROM), or magnetic or optical disk. Thus, a product, such as a computer program product, may include a storage medium and computer readable instructions stored on the medium, which when executed in an endpoint, computer system, or other device, cause the device to perform operations according to any of the description above.

The processing capability of the system may be distributed among multiple system components, such as among multiple processors and memories, optionally including multiple distributed processing systems. Parameters, databases, and other data structures may be separately stored and managed, may be incorporated into a single memory or database, may be logically and physically organized in many different ways, and may implemented in many ways, including data structures such as linked lists, hash tables, or implicit storage mechanisms. Programs may be parts (e.g., subroutines) of a single program, separate programs, distributed across several memories and processors, or implemented in many different ways, such as in a library, such as a shared library (e.g., a dynamic link library (DLL)). The DLL, for example, may store code that performs any of the system processing described above.

## Claims

1. A method comprising:
sharing a radio frequency, RF, interface (112, 212) between a first subscriber identity module, SIM, (102) related to a first radio access technology, and a second SIM (104) related to a second radio access technology, wherein both SIMs (102, 104) are provided in a user equipment (100, 200);
while in idle mode on both the first SIM (102) and the second SIM (104), monitoring for incoming calls in accordance with a first radio access technology; and
while in idle mode on both the first SIM (102) and the second SIM (104), suppressing network connection transitions to a different radio access technology; entering a connected mode by establishing a network connection for the first SIM (102) using the first radio access technology;
while in the connected mode with the established network connection for the first SIM (102), communicating to a network controller (300) that a second radio access technology providing a higher data rate connection than the first radio access technology is supported; and
while in said connected mode, suppressing network connections using the second radio access technology until one or more predetermined transition conditions (130, 230, 312) providing a higher performance characteristic are met.

2. The method of claim 1, where monitoring comprises:
monitoring for the incoming calls, without communicating to the network controller (300) that the second radio access technology is supported.

3. The method of claim 1, where suppressing comprises:
while in idle mode, communicating to the network controller (300) that the second radio access technology is supported; or
communicating to the network controller (300) that there is no coverage for the second radio access technology.

4. The method of claim 1, where suppressing comprises:
determining if there is coverage for the second radio access technology; and
while in idle mode:
communicating to the network controller (300) that the second radio access technology is supported; or
communicating to the network controller (300) that there is no coverage for the second radio access technology.

5. The method of claim 1, further comprising:
while in connected mode, communicating to the network controller (300) that there is coverage for the second radio access technology.

6. The method of claim 1, further comprising:
receiving a message from the network controller (300) to switch to the second radio access technology; and
switching the network connection for the first SIM (102) to the second radio access technology.

7. The method of claim 1, where the predetermined transition condition (130, 230, 312) comprises:
the presence of the system (100) in a cell of a particular type;
the ability of the system (100) to operate according to communication standards;
communication traffic of the system (100) to a data service (402), or both exceeding a communication traffic threshold;
a target transmit or receive data rate for the network connection exceeds what the first radio access technology supporting the network connection can provide;
availability of a specific requested or desired amount or range of bandwidth;
a specified level of power consumption; or
the lowest power consuming.

8. A system comprising:
a radio frequency, RF, interface (112, 212);
system logic (114, 214) in communication with the RF interface (112, 212), the system logic (114, 214) configured to:
share the RF interface between a first subscriber identity module, SIM, (102) related to a first radio access technology, and a second SIM (104) related to a second radio access technology, wherein both SIMs (102, 104) are provided in a user equipment (100, 200);
while in idle mode on both the first SIM (102) and the second SIM (104), monitor for incoming calls in accordance with the first radio access technology; and
while in idle mode, on both the first SIM (102) and the second SIM (104), suppressing network connection transitions to a different radio access technology;
enter a connected mode by establishing a network connection for the first SIM (102) using the first radio access technology;
while in connected mode with the established network connection for the first SIM (102), communicate to a network controller (300) that a second radio access technology providing a higher data rate connection than the first radio access technology is supported; and
while in said connected mode, suppress network connections using the second radio access technology until one or more transition conditions (130, 230, 312) providing a higher performance characteristic are met.

9. The system of claim 8, where the predetermined transition condition (130, 230, 312) comprises that:
a connection for the first SIM (102) in accordance with the first radio access technology is established; and
a target data rate for the established connection exceeds what the first radio access technology can provide.

10. The system of claim 8, where the system logic (114, 214) is configured to suppress connections by:
communicating to the network controller (300) that there is no coverage for the second radio access technology.

11. The system of claim 8, where the system logic (114, 214) is configured to suppress connections by:
while in idle mode, communicating to a network controller (300) that the second radio access technology is supported; and
communicating to the network controller (300) that there is no coverage for the second radio access technology.

12. The system of claim 8, where the system logic (114, 214) is configured to suppress connections by:
determining if there is coverage for the second radio access technology; and
while in idle mode:
communicating to a network controller (300) that the second radio access technology is supported; or
communicating to the network controller (300) that there is no coverage for the second radio access technology.

13. The system of claim 8, where the system logic (114, 214) is further configured to:
while in idle mode, find a cell supported by the second radio access technology that supports higher data rate connections than the first radio access technology. communicate to the network controller (300) that there is coverage for the second radio access technology; and
switch the connected mode for the first SM to the second radio access technology.

14. The system of claim 13, where the system logic (114, 214) is further configured to switch to the second radio access technology upon receipt of an inter-radio access technology handover message received from a network controller (300).

15. The system of claim 8, where the system logic (114, 214) is further configured to:
enter the connected mode for the first SIM (102);
communicate to the network controller (300) that there is coverage for the second radio access technology after determining that a target data rate for the connected mode exceeds what the first radio access technology can provide; and
switch the connected mode for the first SIM (102) to the second radio access technology when instructed by a network controller (300).

## Patentansprüche

1. Verfahren, das umfasst:
- gemeinsames Nutzen einer Hochfrequenz- (HF-) Schnittstelle (112, 212) durch ein erstes Teilnehmeridentitätsmodul (SIM/Subscriber Identity Module) (102), das einer ersten Funkzugangstechnik zugeordnet ist, und ein zweites SIM (104), das einer zweiten Funkzugangstechnik zugeordnet ist, wobei beide SIMs (102, 104) in einem Benutzergerät (100, 200) bereitgestellt sind,
- während sich sowohl das erste SIM (102) als auch das zweite SIM (104) im Ruhemodus befinden, Überwachen eingehender Anrufe gemäß einer ersten Funkzugangstechnik, und
- während sich sowohl das erste SIM (102) als auch das zweite SIM (104) im Ruhemodus befinden, Unterdrücken von Netzwerkverbindungsübergängen zu einer anderen Funkzugangstechnik,
- Eintreten in einen verbundenen Modus durch Einrichten einer Netzwerkverbindung für das erste SIM (102) unter Verwendung der ersten Funkzugangstechnik,
- während des verbundenen Modus mit der für das erste SIM (102) eingerichteten Netzwerkverbindung, Kommunizieren an eine Netzwerksteuereinrichtung (300), dass eine zweite Funkzugangstechnik unterstützt wird, die eine Verbindung mit höherer Datenrate als die erste Funkzugangstechnik bereitstellt, und
- während des verbundenen Modus, Unterdrücken von Netzwerkverbindungen, die die zweite Funkzugangstechnik verwenden, bis eine oder mehrere vorgegebene Übergangsbedingungen (130, 230, 312) erfüllt sind, die eine höhere Leistungscharakteristik bereitstellen.

2. Verfahren nach Anspruch 1, wobei das Überwachen umfasst:
- Überwachen der eingehenden Anrufe, ohne an die Netzwerksteuereinrichtung (300) zu kommunizieren, dass die zweite Funkzugangstechnik unterstützt wird.

3. Verfahren nach Anspruch 1, wobei das Unterdrücken umfasst:
- während des Ruhemodus, Kommunizieren an die Netzwerksteuereinrichtung (300), dass die zweite Funkzugangstechnik unterstützt wird, oder
- Kommunizieren an die Netzwerksteuereinrichtung (300), dass für die zweite Funkzugangstechnik keine Abdeckung vorhanden ist.

4. Verfahren nach Anspruch 1, wobei das Unterdrücken umfasst:
- Bestimmen, ob für die zweite Funkzugangstechnik eine Abdeckung vorhanden ist, und
- während des Ruhemodus:
- Kommunizieren an die Netzwerksteuereinrichtung (300), dass die zweite Funkzugangstechnik unterstützt wird, oder
- Kommunizieren an die Netzwerksteuereinrichtung (300), dass für die zweite Funkzugangstechnik keine Abdeckung vorhanden ist.

5. Verfahren nach Anspruch 1, das ferner umfasst:
- während des verbundenen Modus, Kommunizieren an die Netzwerksteuereinrichtung (300), dass für die zweite Funkzugangstechnik eine Abdeckung vorhanden ist.

6. Verfahren nach Anspruch 1, das ferner umfasst:
- Empfangen einer Nachricht von der Netzwerksteuereinrichtung (300), auf die zweite Funkzugangstechnik umzuschalten, und
- Umschalten der Netzwerkverbindung für das erste SIM (102) auf die zweite Funkzugangstechnik.

7. Verfahren nach Anspruch 1, wobei die vorgegebene Übergangsbedingung (130, 230, 312) umfasst:
- die Anwesenheit des Systems (100) in einer Zelle eines bestimmten Typs,
- die Fähigkeit des Systems (100), gemäß Kommunikationsstandards zu arbeiten,
- dass der Kommunikationsverkehr des Systems (100) mit einem Datendienst (402) in eine oder beide Richtungen einen Kommunikationsverkehrsschwellenwert übersteigt,
- dass eine Ziel-Sende- oder Empfangsdatenrate für die Netzwerkverbindung, das übersteigt, was die die Netzwerkverbindung unterstützende erste Funkzugangstechnik bereitstellen kann,
- Verfügbarkeit eines spezifischen angeforderten oder gewünschten Bandbreitenumfangs oder -bereichs,
- einen vorgegebenen Energieverbrauchspegel oder
- den niedrigsten Energieverbrauch.

8. System, das umfasst:
- eine Hochfrequenz- (HF-) Schnittstelle (112, 212),
- eine Systemlogik (114, 214), die mit der HF-Schnittstelle (112, 212) verbunden ist, wobei die Systemlogik (114, 214) dafür ausgelegt ist:
- die HF-Schnittstelle durch ein erstes Teilnehmeridentitätsmodul (SIM/Subscriber Identity Module) (102), das einer ersten Funkzugangstechnik zugeordnet ist, und ein zweites SIM (104), das einer zweiten Funkzugangstechnik zugeordnet ist, gemeinsam zu nutzen, wobei beide SIMs (102, 104) in einem Benutzergerät (100, 200) bereitgestellt sind,
- während sich sowohl das erste SIM (102) als auch das zweite SIM (104) im Ruhemodus befinden, eingehende Anrufe gemäß der ersten Funkzugangstechnik zu überwachen, und
- während sich sowohl das erste SIM (102) als auch das zweite SIM (104) im Ruhemodus befinden, Netzwerkverbindungsübergänge zu einer anderen Funkzugangstechnik zu unterdrücken,
- durch Einrichten einer Netzwerkverbindung für das erste SIM (102) unter Verwendung der ersten Funkzugangstechnik in einen verbundenen Modus einzutreten,
- während des verbundenen Modus mit der für das erste SIM (102) eingerichteten Netzwerkverbindung, an eine Netzwerksteuereinrichtung (300) zu kommunizieren, dass eine zweite Funkzugangstechnik unterstützt wird, die eine Verbindung mit höherer Datenrate als die erste Funkzugangstechnik bereitstellt, und
- während des verbundenen Modus Netzwerkverbindungen zu unterdrücken, die die zweite Funkzugangstechnik verwenden, bis eine oder mehrere Übergangsbedingungen (130, 230, 312) erfüllt sind, die eine höhere Leistungscharakteristik bereitstellen.

9. System nach Anspruch 8, wobei die vorgegebene Übergangsbedingung (130, 230, 312) umfasst, dass:
- eine Verbindung für das erste SIM (102) gemäß der ersten Funkzugangstechnik eingerichtet ist, und
- eine Zieldatenrate für die eingerichtete Verbindung das übersteigt, was die erste Funkzugangstechnik bereitstellen kann.

10. System nach Anspruch 8, wobei die Systemlogik (114, 214) dafür ausgelegt ist, Verbindungen zu unterdrücken, indem
- an die Netzwerksteuereinrichtung (300) kommuniziert wird, dass für die zweite Funkzugangstechnik keine Abdeckung vorhanden ist.

11. System nach Anspruch 8, wobei die Systemlogik (114, 214) dafür ausgelegt ist, Verbindungen zu unterdrücken, indem,
- während des Ruhemodus, an die Netzwerksteuereinrichtung (300) kommuniziert wird, dass die zweite Funkzugangstechnik unterstützt wird, und
- an die Netzwerksteuereinrichtung (300) kommuniziert wird, dass für die zweite Funkzugangstechnik keine Abdeckung vorhanden ist.

12. System nach Anspruch 8, wobei die Systemlogik (114, 214) dafür ausgelegt ist, Verbindungen zu unterdrücken, indem
- bestimmt wird, ob für die zweite Funkzugangstechnik eine Abdeckung vorhanden ist, und
- während des Ruhemodus
- an eine Netzwerksteuereinrichtung (300) kommuniziert wird, dass die zweite Funkzugangstechnik unterstützt wird, oder
- an die Netzwerksteuereinrichtung (300) kommuniziert wird, dass für die zweite Funkzugangstechnik keine Abdeckung vorhanden ist.

13. System nach Anspruch 8, wobei die Systemlogik (114, 214) ferner dafür ausgelegt ist:
- während des Ruhemodus eine Zelle zu finden, die durch die zweite Funkzugangstechnik unterstützt wird, die Verbindungen mit höherer Datenrate als die erste Funkzugangstechnik unterstützt,
- an die Netzwerksteuereinrichtung (300) zu kommunizieren, dass für die zweite Funkzugangstechnik eine Abdeckung vorhanden ist, und
- den verbundenen Modus für das erste SIM auf die zweite Funkzugangstechnik umzuschalten.

14. System nach Anspruch 13, wobei die Systemlogik (114, 214) ferner dafür ausgelegt ist:
- bei Empfang einer von einer Netzwerksteuereinrichtung (300) empfangenen Inter-Funkzugangstechnik-Übergabenachricht auf die zweite Funkzugangstechnik umzuschalten.

15. System nach Anspruch 8, wobei die Systemlogik (114, 214) ferner dafür ausgelegt ist:
- in den verbundenen Modus für das erste SIM (102) einzutreten,
- an die Netzwerksteuereinrichtung (300) zu kommunizieren, dass für die zweite Funkzugangstechnik eine Abdeckung vorhanden ist, nachdem bestimmt wurde, dass eine Zieldatenrate für den verbundenen Modus das übersteigt, was die erste Funkzugangstechnik bereitstellen kann, und
- den verbundenen Modus für das erste SIM (102) auf die zweite Funkzugangstechnik umzuschalten, wenn dies durch eine Netzwerksteuereinrichtung (300) angewiesen wird.

## Revendications

1. Procédé comprenant les étapes consistant à :
partager une interface de fréquence radio RF (112, 212) entre un premier module d'identité d'abonné SIM (102) lié à une première technologie d'accès radio, et un second SIM (104) lié à une seconde technologie d'accès radio, dans lequel les deux SIM (102, 104) sont fournis dans un équipement utilisateur (100, 200) ;
en mode repos à la fois sur le premier SIM (102) et le second SIM (104), surveiller les appels entrants en fonction d'une première technologie d'accès radio ; et
en mode repos à la fois sur le premier SIM (102) et le second SIM (104), supprimer des transitions de connexion de réseau sur une technologie d'accès radio différente ;
entrer en mode connecté en établissant une connexion de réseau pour le premier SIM (102) à l'aide de la première technologie d'accès radio ;
en mode connecté avec la connexion de réseau établie pour le premier SIM (102), communiquer à un contrôleur de réseau (300) qu'une seconde technologie d'accès radio fournissant une connexion de débit de données supérieure à la première technologie d'accès radio est prise en charge ; et
en mode connecté, supprimer des connexions de réseau à l'aide de la seconde technologie d'accès radio jusqu'à ce qu'une ou plusieurs conditions de transition prédéterminées (130, 230, 312) fournissant une caractéristique de performance supérieure soient remplies.

2. Procédé selon la revendication 1, dans lequel la surveillance consiste à :
surveiller les appels entrants, sans communiquer au contrôleur de réseau (300) que la seconde technologie d'accès radio est prise en charge.

3. Procédé selon la revendication 1, dans lequel la suppression consiste à :
en mode repos, communiquer au contrôleur de réseau (300) que la seconde technologie d'accès radio est prise en charge ; ou
communiquer au contrôleur de réseau (300) qu'il n'existe pas de couverture pour la seconde technologie d'accès radio.

4. Procédé selon la revendication 1, dans lequel la suppression consiste à :
déterminer s'il existe une couverture pour la seconde technologie d'accès radio ; et
en mode repos :
communiquer au contrôleur de réseau (300) que la seconde technologie d'accès radio est prise en charge ; ou
communiquer au contrôleur de réseau (300) qu'il n'existe pas de couverture pour la seconde technologie d'accès radio.

5. Procédé selon la revendication 1, consistant en outre à :
en mode connecté, communiquer au contrôleur de réseau (300) qu'il existe une couverture pour la seconde technologie d'accès radio.

6. Procédé selon la revendication 1, consistant en outre à :
recevoir un message provenant du contrôleur de réseau (300) de commuter à la seconde technologie d'accès radio ; et
commuter la connexion de réseau pour le premier SIM (102) à la seconde technologie d'accès radio.

7. Procédé selon la revendication 1, dans lequel la condition de transition prédéterminée (130, 230, 312) comprend :
la présence du système (100) dans une cellule d'un type particulier ;
la capacité du système (100) à fonctionner en fonction des normes de communication ;
la communication du trafic du système (100) à un service de données (402), ou les deux dépassant un seuil de trafic de communication ;
un débit de données de réception ou de transmission cible pour la connexion de réseau dépasse ce que la première technologie d'accès radio prenant en charge la connexion de réseau peut fournir ;
la capacité d'une quantité ou d'une plage souhaitée ou demandée spécifique de largeur de bande ;
un niveau spécifié de consommation de puissance ; ou
la consommation de puissance la plus basse.

8. Système comprenant :
une interface de fréquence radio, RF (112, 212) ;
une logique de système (114, 214) en communication avec l'interface RF (112, 212), la logique de système (114, 214) est conçue pour :
partager l'interface RF entre un premier module d'identité d'abonné, SIM (102) lié à une première technologie d'accès radio, et un second SIM (104) lié à une seconde technologie d'accès radio, dans lequel les deux SIM (102, 104) sont fournis dans un équipement utilisateur (100, 200) ;
en mode repos à la fois sur le premier SIM (102) et le second SIM (104), surveiller les appels entrants en fonction de la première technologie d'accès radio ; et
en mode repos à la fois sur le premier SIM (102) et le second SIM (104), supprimer des transitions de connexion de réseau sur une technologie d'accès radio différente ;
entrer en mode connecté en établissant une connexion de réseau pour le premier SIM (102) à l'aide de la première technologie d'accès radio ;
en mode connecté avec la connexion de réseau établie pour le premier SIM (102), communiquer à un contrôleur de réseau (300) qu'une seconde technologie d'accès radio fournissant une connexion de débit de données supérieure à la première technologie d'accès radio est prise en charge ; et
dans ledit mode connecté, supprimer des connexions de réseau à l'aide de la seconde technologie d'accès radio jusqu'à ce qu'une ou plusieurs conditions de transition (130, 230, 312) fournissant une caractéristique de performance supérieure soient remplies.

9. Système selon la revendication 8, dans lequel la condition de transition prédéterminée (130, 230, 312) comprend que :
une connexion pour le premier SIM (102) en fonction de la première technologie d'accès radio est établie ; et
un débit de données cible pour la connexion établie dépasse ce que la première technologie d'accès radio peut fournir.

10. Système selon la revendication 8, dans lequel la logique de système (114, 214) est conçue pour supprimer des connexions en :
communiquant au contrôleur de réseau (300) qu'il n'existe pas de couverture pour la seconde technologie d'accès radio.

11. Système selon la revendication 8, dans lequel la logique de système (114, 214) est conçue pour supprimer des connexions par :
en mode repos, la communication à un contrôleur de réseau (300) que la seconde technologie d'accès radio est prise en charge ; et
la communication au contrôleur de réseau (300) qu'il n'existe pas de couverture pour la seconde technologie d'accès radio.

12. Système selon la revendication 8, dans lequel la logique de système (114, 214) est conçue pour supprimer des connexions par :
la détermination s'il existe une couverture pour la seconde technologie d'accès radio ; et
en mode repos :
la communication à un contrôleur de réseau (300) que la seconde technologie d'accès radio est prise en charge ; ou
la communication au contrôleur de réseau (300) qu'il n'existe pas de couverture pour la seconde technologie d'accès radio.

13. Système selon la revendication 8, dans lequel la logique de système (114, 214) est conçue en outre pour :
en mode repos, trouver une cellule prise en charge par la seconde technologie d'accès radio qui prend en charge des connexions de débit de données supérieures par rapport à la première technologie d'accès radio,
communiquer au contrôleur de réseau (300) qu'il existe une couverture pour la seconde technologie d'accès radio ; et
commuter le mode connecté pour le premier SIM à la seconde technologie d'accès radio.

14. Système selon la revendication 13, dans lequel la logique de système (114, 214) est conçue en outre pour commuter la seconde technologie d'accès radio lors de la réception d'un message de transfert de technologie d'accès inter-radio reçu d'un contrôleur de réseau (300).

15. Système selon la revendication 8, dans lequel la logique de système (114, 214) est conçue en outre pour :
entrer dans le mode connecté pour le premier SIM (102) ;
communiquer au contrôleur de réseau (300) qu'il existe une couverture pour la seconde technologie d'accès radio après détermination qu'un débit de données cible pour le mode connecté dépasse ce que la première technologie d'accès radio peut fournir ; et
commuter le mode connecté pour le premier SIM (102) à la seconde technologie d'accès radio lors de l'instruction par un contrôleur de réseau (300).
